# EUROPEAN PATENT APPLICATION

(11) **EP 4 730 373 A1**
(43) Date of publication of application: **22.04.2026**
(21) Application number: 25163783.1
(22) Date of filing: 14.03.2025
(51) Int. Cl.: H01G 2/06, H01G 9/012, H01G 9/08, H01G 9/15, H01G 9/26, H01G 9/048, H01G 9/052, H01G 9/10

(54) **THIN AND HIGH-CAPACITY MULTILAYER SOLID ALUMINUM ELECTROLYTIC CAPACITOR**

(30) Priority: 17.10.2024 CN 202411454038; 17.10.2024 CN 202422516072 U
(71) Applicant: Capxon Electronic Technology Co., Ltd, Shenzhen, Guangdong 518106 (CN)
(72) Inventor: YANG, Cheng-Yi, 518106 Shenzhen (CN); LIN, Chin-Tsun, 518106 Shenzhen (CN); LIN, Yuan-Yu, 518106 Shenzhen (CN); LIN, I-Chu, 518106 Shenzhen (CN); LU, Ting-Chuan, 518106 Shenzhen (CN)
(74) Representative: Vitina, Maruta

(57) **Abstract**

A multilayer solid aluminum electrolytic capacitor includes a casing, a multilayer core, an anode lead frame and a cathode lead frame. The multilayer core is formed by stacking and fixing a plurality of electrode sheets. The multilayer core is encapsulated in the casing. A junction between the anode region and the cathode region is provided with an isolation adhesive. The anode lead frame and the cathode lead frame are embedded at a bottom of the casing. Upper end surfaces of the anode lead frame and the cathode lead frame are respectively electrically connected to an anode end and a cathode end of the multilayer core. Lower end surfaces of the anode lead frame and the cathode lead frame are pass through a bottom surface of the casing to lead out as an anode and a cathode, respectively.

## Description

### TECHNICAL FIELD

This application relates to solid aluminum electrolytic capacitors, and more specifically to a thin and high-capacity multilayer solid aluminum electrolytic capacitor.

### BACKGROUND

Multilayer capacitors are primarily used in electronic products. Thin-profile capacitors has been developed following the trend toward miniaturization and slim design in electronics and components. Currently, the fabrication of the conventional multilayer aluminum electrolytic capacitor generally involves the following steps. A multilayer core is connected to a cathode terminal and an anode lead-out terminal, and encapsulated with a plastic casing. The anode lead-out terminal and cathode terminal extending from sides of the casing are bent along the sides of the casing to enable the anode lead-out terminal and cathode terminal to face towards the bottom of the casing. Subsequently, the anode lead-out terminal and cathode terminal are bent towards the bottom of the casing to enable the terminals to adhere to the bottom of the casing, such that the multilayer aluminum electrolytic capacitor is obtained.

However, the current terminal design requiring two-stage bending inherently limits the thin-profile potential of multilayer capacitors. If the capacitor body is excessively thin, mechanical stress during the bending process may crush the laminated structure, leading to cracks and device failure. Consequently, traditional multilayer capacitors face challenges in achieving both compact size and high capacitance. At present, the number of stacked electrode layers is generally reduced to satisfy thin-profile demands, but this compromises capacitance and affects the performances of the capacitor, especially impedance, failing to meet the performance requirements of modem electronics. Therefore, the conventional structure and manufacturing process of multilayer capacitors cannot simultaneously satisfy miniaturization and high-capacitance characteristics, making them increasingly incompatible with the evolving demands of thin electronic devices.

### SUMMARY

Based on this, it is essential to develop a thin and high-capacitance multilayer solid aluminum electrolytic capacitor. By embedding substrate-based flat positive and negative lead frames into the bottom of the casing as electrode terminals, the bending processes can be omitted, which enables further thickness reduction. Consequently, more electrode sheets can be stacked within limited space, while maximizing the contact area between the lead frames and the multilayer core, thereby achieving ultra-thin design and reduced impedance to render the capacitor a compact size and a high capacitance. It also resolves the technical problem existing in the traditional capacitors, i.e., pin-bending processes prevent the fabrication of thin and miniaturized capacitors.

Technical solutions of the present disclosure are described below.

A multilayer solid aluminum electrolytic capacitor, comprising:
a casing;
a multilayer core;
an anode lead frame; and
a cathode lead frame;
wherein the multilayer core is formed by stacking and fixing a plurality of electrode sheets; the multilayer core is encapsulated in the casing; a substrate of each of the plurality of electrode sheets is a valve metal foil; one end of each of the plurality of electrode sheets is configured as an anode region, and the other end of each of the plurality of electrode sheets is configured as a cathode region; and a junction between the anode region and the cathode region is provided with an isolation adhesive for separating the anode region from the cathode region; and
the anode lead frame is embedded at a bottom of the casing; an upper end surface of the anode lead frame is electrically connected to an anode end of the multilayer core, and a lower end surface of the anode lead frame is configured to pass through a bottom surface of the casing to be exposed as an anode lead-out terminal; the cathode lead frame is embedded at the bottom of the casing; an upper end surface of the cathode lead frame is electrically connected to a cathode end of the multilayer core, and a lower end surface of the cathode lead frame is configured to pass through the bottom surface of the casing to be exposed as a cathode lead-out terminal.

In some embodiments, the upper end surface of the anode lead frame is configured as an anode connection seat; the anode connection seat is configured to contact and be electrically connected with the anode end of the multilayer core; and the anode lead-out terminal is embedded in the bottom surface of the casing.

In some embodiments, the upper end surface of the cathode lead frame is configured as a cathode connection seat; the cathode lead-out terminal comprises a first cathode terminal portion and a second cathode terminal portion; a recessed portion is provided between the first cathode terminal portion and the second cathode terminal portion; the cathode connection seat is configured to contact and be electrically connected with the cathode end of the multilayer core; a surface of the recessed portion is covered by the bottom surface of the casing; the first cathode terminal portion and the second cathode terminal portion are configured to pass through the bottom surface of the casing to be exposed, and the first cathode terminal portion and the second cathode terminal portion are embedded in the bottom surface of the casing.

In some embodiments, an end of the anode lead-out terminal extending along a length direction of the bottom surface of the casing is provided with an anode bending portion; an anode groove is provided at an inner side of a connection between the anode bending portion and the anode lead-out terminal; and an inner side of the anode bending portion is configured to fit a side wall of the casing.

In some embodiments, an end of the second cathode terminal portion extending along a length direction of the bottom surface of the casing is provided with a cathode bending portion; a cathode groove is provided at an inner side of a connection between the cathode bending portion and the second cathode terminal portion; and an inner side of the cathode bending portion is configured to fit a side wall of the casing.

In some embodiments, two sides of the upper end surface of the cathode lead frame in a width direction are each provided with an extending wall portion; an inner side of the extending wall portion is configured to be in contact and electrically connected with a side wall of the cathode end of the multilayer core, and an outer side of the extending wall portion is configured to pass through a side surface of the casing to be exposed as a portion of the cathode lead-out terminal.

In some embodiments, the upper end surface of the anode lead frame, the upper end surface of the cathode lead frame and the inner side of the extending wall portion are each provided with a metal coating.

In some embodiments, the valve metal foil is selected from the group consisting of an aluminum foil, a copper foil, a silver foil, and a tantalum foil.

The beneficial effects of the present disclosure are described below.

A thin and high-capacity multilayer solid aluminum electrolytic capacitor is used to solve the problem in the prior art that traditional multilayer capacitors cannot be fabricated to have both small volume and large capacity due to the size limitation of the lead bending process. Compared with the prior art, the present disclosure has at least the following advantages. In the present disclosure, the flat substrate-type anode and cathode lead frames are embedded at the bottom of the casing without bending for leading out electrodes. On the one hand, the anode and cathode lead frames are not required to be bent after packaging. Therefore, the external dimensions of the product are not restricted by the bending process, and the product volume can be reduced while maintaining the same capacity, achieving product thinning. On the other hand, the contact area among the anode and cathode lead frames and the multilayer core is maximized, effectively optimizing the parallel impedance. At the same time, the current-passing area is also increased, reducing the generation of internal heat sources. The anode and cathode lead frames are directly led out without bending, maximizing the contact area among the anode and cathode lead frames and the circuit board. This effectively optimizes the parallel impedance and increases the current-passing area, thereby reducing the generation of external heat sources. A metal coating is provided on the inner end surfaces of the anode and cathode lead frames, which isolates the electric field effect and improves the stability and reliability of the multilayer capacitor. Through this design, the capacitor is made thinner and lighter, and the impedance is reduced, enabling the capacitor to have the characteristics of both small volume and large capacity, improving its safety and stability, and extending its service life. Moreover, the manufacturing process is simple with convenient operations and low cost, which can meet the current demand for thinning of electronic products.

### BRIEF DESCRIPTION OF THE DRAWINGS

To more clearly illustrate the technical solutions of the embodiments of the present disclosure, the accompanying drawings that need to be used for the description of the embodiments will be introduced briefly below. Obviously, the following accompanying drawings are only some of the embodiments of the present disclosure, and other accompanying drawings can be obtained by one of ordinary skill int the art based on these drawings without creative labor.
Fig. 1 is a schematic structural diagram of a solid aluminum electrolytic capacitor according to an embodiment of the present disclosure;
Fig. 2 is a cross-section view of Fig. 1 along line 1-1;
Fig. 3 schematically illustrates an interior of a casing of the solid aluminum electrolytic capacitor according to an embodiment of the present disclosure;
Fig. 4 schematically illustrates connection among a multilayer core, an anode lead frame and a cathode lead frame according to an embodiment of the present disclosure; and
Fig. 5 is a schematic diagram of the anode lead frame and the cathode lead frame according to an embodiment of the present disclosure.

In the drawings:
1, casing; 2, multilayer core; 3, anode lead frame; 4, cathode lead frame; 5, metal coating;
201, electrode sheet; 301, anode connection seat; 302, anode lead-out terminal; 303, anode bending portion; 304, anode groove; 401, cathode connection seat; 402, extending wall portion; 403, first cathode terminal portion; 404, second cathode terminal portion; 405, cathode bending portion; 406, recessed portion; 407, cathode groove; 2011, anode region;
2012, cathode region; and 2013, isolation adhesive.

### DETAILED DESCRIPTION OF EMBODIMENTS

The technical solutions in the embodiments of the present disclosure will be described clearly and completely with reference to the accompanying drawings. Obviously, the described embodiments are only a part of the embodiments of the present disclosure. The following description of at least one exemplary embodiment is merely illustrative and does not serve as any limitation to the present disclosure and application or use thereof. Based on the embodiments in the present disclosure, all other embodiments obtained by one of ordinary skill in the art without making creative labor shall fall within the scope of protection of the present disclosure.

It should be understood that as used herein, all directional indicators (such as both sides, upper, lower, top, bottom, inner, outer, etc.) in the accompanying drawings are only for convenient and simplifying description, rather than indicating or implying that the referred device or component must have a specific orientation, or be constructed and operated in a specific orientation. Therefore, these terms should not be construed as limitations to the present disclosure. As used herein, unless otherwise specified, the term "a plurality of" means two or more, and the term "comprise" and any variants thereof mean "at least include". It should be noted that as used herein, the terms (such as "first", "second", etc.) are used for the purpose of differentiation and do not refer to a sequence of priority.

It should be noted that as used herein, unless otherwise clearly defined and limited, the terms (such as "install", "connect", and "link") should be understood in a broad sense. For example, it can be a fixed connection, a detachable connection, or an integrally formed connection; it can be a mechanical connection or an electrical connection; it can be a direct connection or an indirect connection through an intermediate medium, and it can be the internal communication between two components. For one of ordinary skill in the art, the specific meanings of the above terms in the present disclosure can be understood according to specific situations.

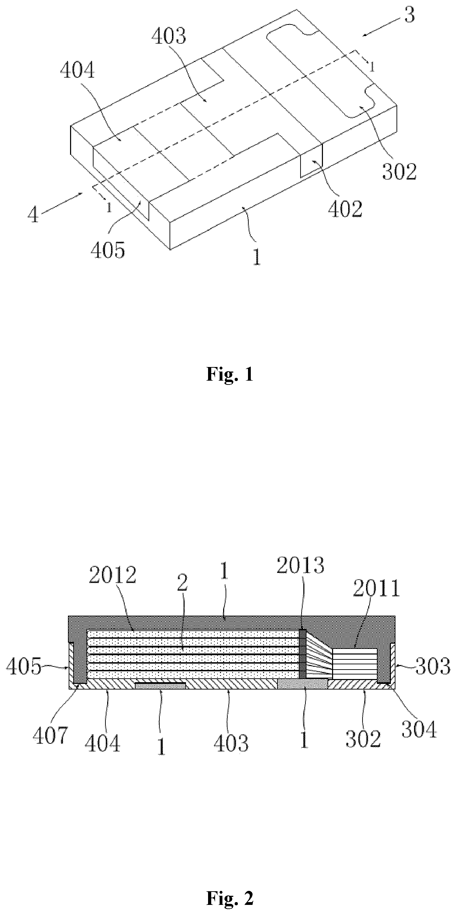

As shown in Figs. 1-2, a thin and high-capacity multilayer solid aluminum electrolytic capacitor includes a casing 1, a multilayer core 2, an anode lead frame 3, and a cathode lead frame 4. The multilayer core 2 is formed by stacking and fixing a plurality of electrode sheets 201. The multilayer core 2 is encapsulated in the casing 1. A substrate of each of the plurality of electrode sheets 201 is a valve metal foil. One end of each of the plurality of electrode sheets is configured as an anode region 2011, and the other end of each of the plurality of electrode sheets is configured as a cathode region 2012. The junction between the anode region 2011 and the cathode region 2012 is provided with an isolation adhesive 2013 for separating the anode region 2011 from the cathode region 2012. The anode lead frame 3 is embedded at a bottom of the casing 1. An upper end surface of the anode lead frame 3 is electrically connected to an anode end of the multilayer core 2, and a lower end surface passes through the bottom of the casing 1 to be exposed as an anode lead-out terminal. The cathode lead frame 4 is embedded at the bottom of the casing 1. An upper end surface of the cathode lead frame 4 is electrically connected to a cathode end of the multilayer core 2, and a lower end surface of the cathode lead frame 4 passes through the bottom of the casing 1 to be exposed out as a cathode lead-out terminal.

The electrode sheet 201 takes a valve metal foil as the substrate, with one end being the anode region 2011 and the other end being the cathode region 2012. The junction between the anode region 2011 and the cathode region 2012 is provided with the isolation adhesive 2013 for separating the anode region 2011 from the cathode region 2012. Specifically, the valve metal foil is one of aluminum foil, copper foil, silver foil, and tantalum foil. In this embodiment, the valve metal foil is an aluminum foil. An oxide film is formed on an outer surface of the cathode region 2012, a conductive polymer layer is formed on an outer surface of the oxide film, a carbon layer is formed on a surface of the conductive polymer layer, and a metal paste layer is coated on a surface of the carbon layer. In this embodiment, the metal paste layer is a silver paste. The isolation adhesive 2013 insulates and separates the anode region 2011 and the cathode region 2012. The multilayer core 2 is formed by stacking and fixing the plurality of electrode sheets 201. The multilayer core 2 is composed of at least one electrode sheet 201, and the number of stacked electrode sheets 201 is set according to the actual application. After the plurality of electrode sheets 201 are stacked, anode regions 2011 of adj acent electrode sheets 201 are fixed in parallel to form the anode end of the multilayer core 2, and cathode regions 2012 of adjacent electrode sheets are bonded and cured by silver paste in parallel to form the cathode end of the multilayer core 2.

The upper end surface of the anode lead frame 3 is connected and fixed to the lower end face of the anode end of the multilayer core 2 to be exposed as the anode lead-out terminal, and the upper end surface of the cathode lead frame 4 is connected and fixed to the lower end of the cathode end of the multilayer core 2. By injection molding and encapsulation of the multilayer core 2, the anode lead frame 3 and the cathode lead frame 4, a multilayer aluminum electrolytic capacitor with the casing 1 sealingly wrapped is obtained. The entire lower end surface of the anode lead frame 3 passes through the bottom surface of the casing 1 to be exposed as the anode lead-out terminal. The lower end surface of the cathode lead frame 4 passes through the bottom surface of the casing 1 to be exposed as the cathode lead-out terminal. The exposed parts can be directly used as the soldering pins for leading out the cathode and the anode, such that a bending process for the exposed parts is omitted, and the size of the capacitor can be made thin and small. Since the casing 1 is prepared by integral injection molding, such that joints among side parts of the anode lead frame 3 and the cathode lead frame 4 and the casing 1 are sealed and firm.

Preferably, the upper end surface of the anode lead frame 3 is configured as an anode connection seat 301, and the lower end surface of the anode lead frame 3 is configured as the anode lead-out terminal 302. The anode connection seat 301 contacts and forms an electrical connection with the anode end of the multilayer core 2. The anode lead-out terminal 302 is embedded in the bottom surface of the casing 1.

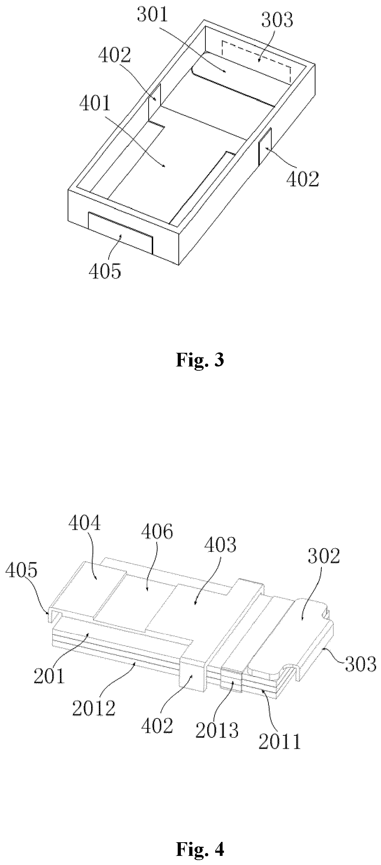

Specifically, the upper surface of the anode connection seat 301 on the upper end surface of the anode lead frame 3 can completely fit and contact a lower surface of the anode end of the multilayer core 2, which increases the contact area between the anode lead frame 3 and the anode end of the multilayer core 2, effectively optimizes the anode parallel impedance, increases the area through which the current passes, and reduces the generation of internal heat sources, thereby improving the stability of the capacitor. The anode lead-out terminal 302 at the lower end of the anode lead frame 3 and the anode connection seat 301 at the upper end are in an up-down relationship in structure, such that the bending of the anode lead-out terminal 302 is not required, thereby further miniaturizing the size of the capacitor and improving the space utilization rate. This structure shortens the current transmission distance and improves the electrical transmission performance. In addition, in this structure, the area of the anode lead-out terminal 302 is maximized, improving the soldering stability and heat transfer performance between the anode lead-out terminal 302 and the circuit board. Preferably, as shown in Fig. 1, the upper end surface of the cathode lead frame 4 is configured as a cathode connection seat 401, and the lower end surface of the cathode lead frame 4 is configured as a cathode lead-out terminal, and the cathode lead-out terminal includes a first cathode terminal portion 403 and a second cathode terminal portion 404. A recessed portion 406 is provided between the first cathode terminal portion 403 and the second cathode terminal portion 404. The cathode connection seat 401 contacts and electrically connects with the cathode end of the multilayer core 2. The surface of the recessed portion 406 is covered by the bottom surface of the casing 1. The first cathode terminal portion 403 and the second cathode terminal portion 404 pass through the bottom surface of the casing 1 to be exposed, and the exposed parts are embedded in the bottom surface of the casing 1. Specifically, as shown in Figs. 4-5, the surface of the cathode connection seat 401 on the upper end surface of the cathode lead frame 4 completely fits and contacts the lower surface of the cathode end of the multilayer core 2, which increases the contact area between the cathode lead frame 4 and the cathode end of the multilayer core 2, effectively optimizes the cathode parallel impedance while increasing the area through which the current passes and reducing the generation of internal heat sources at the negative electrode, thereby improving the stability of the capacitor.

The first cathode terminal portion 403 and the second cathode terminal portion 404 at the lower end of the cathode lead frame 4 and the cathode connection seat 401 are in an up-down relationship in structure, where upper ends of the first cathode terminal portion 403 and the second cathode terminal portion 404 are on the same plane as the cathode connection seat 401.

The first cathode terminal portion 403 and the second cathode terminal portion 404 are not required to be bent, which can further miniaturize the size of the capacitor, and thus improves the space utilization rate. Such a structure can shorten the current transmission distance and improves the electrical transmission performance. In addition, the areas of the first cathode terminal portion 403 and the second cathode terminal portion 404 are maximized, which improves the soldering stability and heat transfer performance between the first cathode terminal portion 403, the second cathode terminal portion 404 and the circuit board.

By providing the recessed portion 406, of which the surface is covered by the bottom surface of the casing 1, the cathode lead frame 4 can be limited and fixed. This prevents the cathode lead frame 4 from moving outward, improves the rigid combination between the cathode lead frame 4 and the casing 1, and further improves the sealing performance between the cathode lead frame 4 and the casing 1.

In some embodiments, as shown in Figs. 1-2, one end of the anode lead-out terminal 302 extending along the length direction of the bottom surface of the casing 1 is provided with an anode bending portion 303. An anode groove 304 is provided at an inner side of a connection between the anode bending portion 303 and the anode lead-out terminal 302, and an inner side of the anode bending portion 303 is configured to fit the side wall of the casing 1.

By providing the anode bending portion 303 at one end of the anode lead-out terminal 302 extending along the length direction of the bottom surface of the casing 1, the anode lead-out area is further expanded. The inner side of the anode bending portion 303 is attached to the side wall of the casing 1, which improves the adhesion between the anode lead frame 3 and the casing. The anode groove 304 is provided at the inner side of the connection portion between the anode bending portion 303 and the anode lead-out terminal 302, which extends the path for external water vapor to enter, and further improves the sealing performance. In addition, the anode groove 304 further strengthens the combination between the anode lead frame 3 and the casing 1, thereby improving the stability of the capacitor. When installed and used, the anode lead-out terminal 302 is soldered to the circuit board in the horizontal direction, and the anode bending portion 303 is soldered to the circuit board in the vertical direction. Through multi-directional soldering, the stability of the multilayer aluminum electrolytic capacitor is improved.

In some embodiments, as shown in Figs. 1-2, one end of the second cathode terminal portion 404 extending along the length direction of the bottom surface of the casing 1 is provided with a cathode bending portion 405. A cathode groove 407 is provided at an inner side of a connection portion between the cathode bending portion 405 and the second cathode terminal portion 404, and an inner side of the cathode bending portion 405 is attached to the side wall of the casing 1.

By providing the cathode bending portion 405 at one end of the second cathode terminal portion 404 extending along the length direction of the bottom surface of the casing 1, the cathode lead-out area is further expanded. The inner side of the cathode bending portion 405 is attached to the side wall of the casing 1, which improves the adhesion between the cathode lead frame 4 and the casing. The cathode groove 407 is provided at the inner side of the connection portion between the cathode bending portion 405 and the second cathode terminal portion 404, which extends the path for external water vapor to enter, and further improves the sealing performance. In addition, the cathode groove 407 further strengthens the combination between the cathode lead frame 4 and the casing 1, thereby improving the stability of the capacitor. When installed and used, the first cathode terminal portion 403 and the second cathode terminal portion 404 are soldered to the circuit board in the horizontal direction, and the cathode bending portion 405 is soldered to the circuit board in the vertical direction. Through multi-directional soldering, the stability of the multilayer aluminum electrolytic capacitor is improved.

In some embodiments, preferably, two sides of the upper end surface of the cathode lead frame 4 in the width direction are each provided with an extending wall portion 402, where inner sides of the wall extending portion 402 are in contact with and electrically connected with side walls of the cathode end of the multilayer core 2, and outer sides of the extending wall portion 402 pass through a side surface of the casing 1 to be exposed as a portion of the cathode lead-out terminal.

Specifically, as shown in Figs. 1, 3 and 5, the extending wall portion 402 is perpendicular to the upper end surface of the cathode lead frame 4. The number of the wall portions 402 is not limited. In this embodiment, the number of the wall portion 402 is two, and the two wall portions are symmetrically arranged. When the electrode sheets 201 are stacked on the cathode connection seat 401, side surfaces of the electrode sheets 201 are in contact with the inner sides of the wall portions 402. The inner side of the wall portions 402 play a role in connecting the side surfaces of the electrode sheets 201, improving the parallel effect between the electrode sheets 201 and reducing the equivalent series resistance (ESR) value between the pole pieces. The outer sides of the wall portion 402 pass through the outer side surface of the casing 1 to be exposed as electrode terminals, further increasing the lead-out area of the negative electrode, optimizing the equivalent parallel impedance, and improving the solderability and heat dissipation performance of the negative electrode.

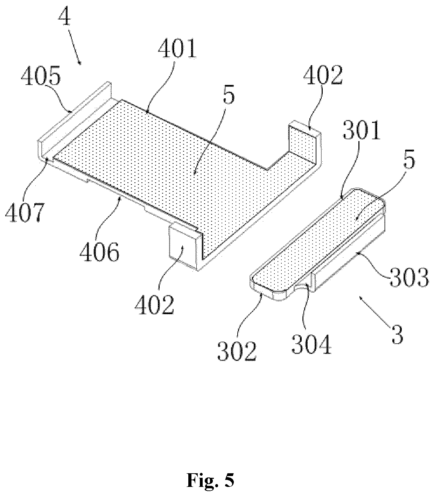

In some embodiments, as shown in Fig. 5, preferably, the upper end surface of the anode lead frame 3, the upper end surface of the cathode lead frame 4 and the inner sides of the extending wall portion 402 are each provided with a metal coating 5. By providing the metal coating 5 on the upper end surface of the anode lead frame 3 and the upper end surface of the cathode lead frame 4, the electric field effect is isolated, and the stability and reliability of the stacked capacitor are improved.

In some embodiments, the upper end surface of the anode lead frame 3, the upper end surface of the cathode lead frame 4, and the inner side of the extending wall portion 402 are each coated with a conductive adhesive, such as silver paste, which can fill the gaps among the multilayer core 2, the anode connection seat 301, the cathode connection seat 401, and the extending wall portion 402. This further increases the output contact area, effectively optimizes the parallel impedance, and improves the stability of the multilayer aluminum electrolytic capacitor.

Such design can achieve the effects of thinning and reducing the impedance without changing the capacitance, enabling the capacitor to have the characteristics of both a small volume and a large capacitance. The safety and stability of the capacitor are improved, and the service life of the multilayer aluminum electrolytic capacitor is extended. Moreover, the manufacturing process for the capacitor is simple with convenient operation and low cost, which can meet the current demand for thinning of electronic products.

It should be emphasized that the embodiments described in the present disclosure are illustrative rather than restrictive. Therefore, the present disclosure is not limited to the embodiments described herein. Any other embodiments obtained by one of ordinary skill in the art according to the technical solutions of the present disclosure also fall within the protection scope of the present disclosure.

## Claims

1. A multilayer solid aluminum electrolytic capacitor, comprising:
a casing (1);
a multilayer core (2);
an anode lead frame (3); and
a cathode lead frame (4);
**characterized in that** the multilayer core (2) is formed by stacking and fixing a plurality of electrode sheets (201); the multilayer core (2) is encapsulated in the casing (1); a substrate of each of the plurality of electrode sheets (201) is a valve metal foil; one end of each of the plurality of electrode sheets (201) is configured as an anode region (2011), and the other end of each of the plurality of electrode sheets (201) is configured as a cathode region (2012); and a junction between the anode region (2011) and the cathode region (2012) is provided with an isolation adhesive (2013) for separating the anode region (2011) from the cathode region (2012); and
the anode lead frame (3) is embedded at a bottom of the casing (1); an upper end surface of the anode lead frame (3) is electrically connected to an anode end of the multilayer core (2), and a lower end surface of the anode lead frame (3) is configured to pass through a bottom surface of the casing (1) to be exposed as an anode lead-out terminal (302); the cathode lead frame (4) is embedded at the bottom of the casing (1); an upper end surface of the cathode lead frame (4) is electrically connected to a cathode end of the multilayer core (2), and a lower end surface of the cathode lead frame (4) is configured to pass through the bottom surface of the casing (1) to be exposed as a cathode lead-out terminal.

2. The multilayer solid aluminum electrolytic capacitor according to claim 1, **characterized in that** the upper end surface of the anode lead frame (3) is configured as an anode connection seat (301); the anode connection seat (301) is configured to contact and be electrically connected with the anode end of the multilayer core (2); and the anode lead-out terminal (302) is embedded in the bottom surface of the casing (1).

3. The multilayer solid aluminum electrolytic capacitor according to claim 1, **characterized in that** the upper end surface of the cathode lead frame (4) is configured as a cathode connection seat (401); the cathode lead-out terminal comprises a first cathode terminal portion (403) and a second cathode terminal portion (404); a recessed portion (406) is provided between the first cathode terminal portion (403) and the second cathode terminal portion (404); the cathode connection seat (401) is configured to contact and be electrically connected with the cathode end of the multilayer core (2); a surface of the recessed portion (406) is covered by the bottom surface of the casing (1); the first cathode terminal portion (403) and the second cathode terminal portion (404) are configured to pass through the bottom surface of the casing (1) to be exposed, and the first cathode terminal portion (403) and the second cathode terminal portion (404) are embedded in the bottom surface of the casing (1).

4. The multilayer solid aluminum electrolytic capacitor according to claim 2, **characterized in that** an end of the anode lead-out terminal (302) extending along a length direction of the bottom surface of the casing (1) is provided with an anode bending portion (303); an anode groove is provided at an inner side of a connection between the anode bending portion (303) and the anode lead-out terminal (302); and an inner side of the anode bending portion (303) is configured to fit a side wall of the casing (1).

5. The multilayer solid aluminum electrolytic capacitor according to claim 3, **characterized in that** an end of the second cathode terminal portion (404) extending along a length direction of the bottom surface of the casing (1) is provided with a cathode bending portion (405); a cathode groove (407) is provided at an inner side of a connection between the cathode bending portion (405) and the second cathode terminal portion (404); and an inner side of the cathode bending portion (405) is configured to fit a side wall of the casing (1).

6. The multilayer solid aluminum electrolytic capacitor according to claim 1, **characterized in that** two sides of the upper end surface of the cathode lead frame (4) in a width direction are each provided with an extending wall portion (402); an inner side of the extending wall portion (402) is configured to be in contact and electrically connected with a side wall of the cathode end of the multilayer core (2), and an outer side of the extending wall portion (402) is configured to pass through a side surface of the casing (1) to be exposed as a portion of the cathode lead-out terminal.

7. The multilayer solid aluminum electrolytic capacitor according to claim 6, **characterized in that** the upper end surface of the anode lead frame (3), the upper end surface of the cathode lead frame (4) and the inner side of the extending wall portion (402) are each provided with a metal coating (5).

8. The multilayer solid aluminum electrolytic capacitor according to claim 1, **characterized in that** the valve metal foil is selected from the group consisting of an aluminum foil, a copper foil, a silver foil, and a tantalum foil.
